# EUROPEAN PATENT APPLICATION

(11) **EP 4 691 789 A1**
(43) Date of publication of application: **11.02.2026**
(21) Application number: 24780687.0
(22) Date of filing: 28.03.2024
(51) Int. Cl.: B41M 5/00, B41J 2/01, C09D 11/30

(54) **INKJET RECORDING METHOD**

(30) Priority: 30.03.2023 JP 2023055780
(71) Applicant: Mitsubishi Chemical Corporation, Tokyo 100-8251 (JP)
(72) Inventor: INABA, Keisuke, Tokyo 100-8251 (JP)
(74) Representative: Hoffmann Eitle
(86) International application number: PCT/JP2024/012747
(87) International publication number: WO 2024/204588

(57) **Abstract**

An inkjet recording method including: (a) applying an inkjet ink containing at least a polymerizable compound, a polymerization initiator, and water to an absorptive recording medium; and (b) irradiating the absorptive recording medium with an active energy ray simultaneously with the application of the inkjet ink.

## Description

### Technical Field

The present invention relates to an inkjet recording method.

### Background Art

Inkjet recording methods have features such as easy full colorization, making less noise, low-cost production of high-resolution images, enabling high-speed printing, enabling printing not only on flat surfaces but also on curved surfaces, and enabling easy printing on large areas. Thus, inkjet recording methods are not limited to personal use, and in recent years, the methods are rapidly spreading in commercial inkjet printers for sign applications, window films, posters, car wrapping, wallpaper, and the like.

A method using a solventless UV ink is known as an inkjet recording method. However, this method provides excellent coating film strength and substrate versatility but has poor environmental and safety properties, increases the ink thickness due to high viscosity of the ink, and results in poor surface smoothness of the printed film.

In recent years, recording methods using an ultraviolet-curable aqueous ink have also been developed. However, while ultraviolet-curable aqueous inks have excellent environmental and safety properties due to their aqueous nature, they exhibit weak coating film strength, and it has been necessary to apply a pretreatment liquid before ink application (e.g., Patent Literatures 1 and 2).

In particular, the problem of the weak coating film strength has been evident when an absorptive recording medium, such as a fabric, is used as a recording medium.

### Citation List

### Patent Literature

Patent Literature 1: JP 2022-067314 A
Patent Literature 2: JP 2011-218571 A

### Summary of Invention

### Technical Problem

An object of the present invention is to provide an inkjet recording method capable of increasing the strength of a printed coating film without the need for pretreatment in inkjet recording using an ultraviolet-curable aqueous ink.

### Solution to Problem

As a result of diligent studies, the present inventors have found that the above problems can be solved by applying an ultraviolet-curable aqueous ink to an absorptive recording medium simultaneously with active energy ray irradiation and adjusting the surface temperature of the recording surface of the absorptive recording medium at that time to a specific range.

The present invention has been completed based on such findings, and the gist is as follows.

[1] An inkjet recording method including:
   (a) applying an inkjet ink containing at least a polymerizable compound, a polymerization initiator, and water to an absorptive recording medium; and
   (b) irradiating the absorptive recording medium with an active energy ray simultaneously with the application of the inkjet ink,
   in which a surface temperature of a recording surface of the absorptive recording medium is 35°C or higher at the start of Step (a).
[2] The inkjet recording method according to [1], in which the surface temperature of the recording surface of the absorptive recording medium is 120°C or lower.
[3] The inkjet recording method according to [2], in which the surface temperature of the recording surface of the absorptive recording medium is 100°C or lower.
[4] The inkjet recording method according to any one of [1] to [3], in which the absorptive recording medium is heated by a heating means at the start of Step (a).
[5] The inkjet recording method according to [4], in which the absorptive recording medium is heated from an opposite side to the recording surface of the absorptive recording medium.
[6] The inkjet recording method according to [4] or [5], in which the heating means is a hot plate.
[7] The inkjet recording method according to any one of [1] to [6], in which the absorptive recording medium is a fabric.
[8] The inkjet recording method according to any one of [1] to [7], in which the inkjet ink contains 70 mass% or more of a volatile component relative to a total amount of the inkjet ink.
[9] The inkjet recording method according to any one of [1] to [8], in which a content of the water relative to a total amount of the inkjet ink is 40 mass% or more.
[10] The inkjet recording method according to any one of [1] to [9], in which a light source of the active energy ray is a light-emitting diode with an emission peak wavelength in a range of 350 nm to 420 nm.
[11] The inkjet recording method according to any one of [1] to [10], in which the inkjet ink contains a sensitizer and/or a surfactant.
[12] The inkjet recording method according to any one of [1] to [11], in which a pretreatment agent is not applied to the absorptive recording medium before Step (a).
[13] The inkjet recording method according to any one of [1] to [12], in which the polymerizable compound is present as particles in the inkjet ink.
[14] The inkjet recording method according to [13], in which the particles has an average particle size of 10 nm or more and 200 nm or less.
[15] The inkjet recording method according to any one of [1] to [14], in which the polymerizable compound includes a (meth)acrylate compound.
[16] The inkjet recording method according to any one of [1] to [15], in which the inkjet ink contains a pigment.
[17] The inkjet recording method according to any one of [1] to [16], in which the active energy ray has an irradiation energy of 0.1 J/cm² or more.
[18] The inkjet recording method according to any one of [1] to [17], in which a mode for applying the inkjet ink to the absorptive recording medium is a shuttle mode.
[19] The inkjet recording method according to any one of [1] to [18], in which an irradiation mode for the active energy ray is a shuttle mode.
[20] The inkjet recording method according to any one of [1] to [19], in which the inkjet ink contains a water-soluble organic solvent.
[21] The inkjet recording method according to any one of [1] to [20], in which a viscosity of the inkjet ink at 25°C is 1 mPa·sec or more and 25 mPa·sec or less.

### Advantageous Effects of Invention

According to the inkjet recording method of the present invention, a printed coating film with sufficient strength can be formed in inkjet recording using an ultraviolet-curable aqueous ink with excellent environmental and safety properties without performing any pretreatment.

Thus, reduction of the number of processes in inkjet recording and improvement in the coating film strength enable a high-quality printed image to be efficiently obtained.

### Description of Embodiments

Hereinafter, embodiments of the present invention will be described. However, the present invention is not limited to these embodiments.

In the present invention, the expression "X to Y" (X and Y are any numerals) includes the meaning of "X or more and Y or less" as well as the meaning of "preferably more than X" and "preferably less than Y" unless otherwise specified.

An inkjet recording method of the present invention is an inkjet recording method including:
(a) applying an inkjet ink (which may hereinafter be referred to as "the inkjet ink of the present invention") containing at least a polymerizable compound, a polymerization initiator, and water to an absorptive recording medium; and
(b) irradiating the absorptive recording medium with an active energy ray simultaneously with the application of the inkjet ink,
in which a surface temperature of a recording surface of the absorptive recording medium is 35°C or higher at the start of Step (a).

Hereinafter, the active energy ray irradiation simultaneously with the application of the ink as described above may be referred to as "simultaneous irradiation."

The inkjet recording method of the present invention may further include another step, as necessary. For example, the method may further include drying to dry and remove a solvent in the inkjet ink applied onto the absorptive recording medium, such as a fabric.

In addition, the method can also include applying a pretreatment agent to the recording medium before Step (a). However, the inkjet recording method of the present invention preferably does not include applying a pretreatment agent. That is, in the present invention, a printed coating film with sufficient strength can be formed by performing the simultaneous irradiation even without applying a pretreatment agent before Step (a). Thus, it is also one of the features of the present invention that applying a pretreatment agent can be omitted.

### Mechanism

The mechanism by which the inkjet recording method of the present invention, which performs the simultaneous irradiation, can increase the strength of a printed coating film is considered as follows.

In the case of applying an inkjet ink to an absorptive recording medium, such as a fabric, and then irradiating with an active energy ray as in methods known in the art, the ink penetrates the absorptive recording medium before the active energy ray irradiation, and curing components (a polymerizable compound and a polymerization initiator) in the ink are separated. Thus, a curing reaction does not sufficiently proceed even by the active energy ray irradiation. Thus, a printed coating film formed is not provided with sufficient strength.

In the inkjet recording method of the present invention, the irradiation with an active energy ray simultaneously with the ink application allows the curing reaction of the ink to immediately proceed, and the reaction heat of the curing reaction facilitates the volatilization of an ink solvent. This increases the viscosity of the ink and makes it difficult for the ink to penetrate the absorptive recording medium.

In addition, in this simultaneous irradiation, the surface temperature of the recording surface of the absorptive recording medium is adjusted to 35°C or higher at the start of Step (a). This promotes the curing reaction of the ink and the volatilization of an ink solvent and more effectively suppresses the penetration of the ink into the absorptive recording medium.

From these, according to the present invention, the method is considered to be able to suppress the separation of the curing components in the ink and to increase the strength of the printed coating film. Thus, the present invention is considered to achieve the effects particularly when the polymerizable compound is present as particles in the ink.

In addition, the problem due to the penetration of the ink into the absorptive recording medium is considered to be particularly problematic in a system containing a solvent in the ink (aqueous ink or solvent-based ink).

### Step (a): Ink Application

In Step (a) in the inkjet recording method of the present invention, the inkjet ink of the present invention contained in an ink set is applied to an absorptive recording medium, such as a fabric, for example, from an inkjet head of an inkjet printer.

The method of applying the inkjet ink of the present invention is not particularly limited as long as the method can apply the inkjet ink in a desired image pattern.

The inkjet mode employed in the present invention is a preferred method from the viewpoint of compactification of the recording apparatus and high-speed recording.

In image formation by the inkjet mode, a colored image is formed by ejecting an inkjet ink onto a recording medium by applying energy.

The amount of ink used for image formation is usually about 30 g/m² or less, although this depends on an image desired to be formed. For example, in the case of printing with the number of passes of 8, the ink ejection amount per pass is one eighth of the above ink amount, that is, about 3.75 g/m² or less.

The inkjet mode is not particularly limited and may be a known method, for example, any of a charge control mode of ejecting ink by utilizing electrostatic attraction, a drop-on-demand mode (pressure pulse mode) utilizing vibration pressure of a piezoelectric element, and an acoustic inkjet mode of irradiating ink with an acoustic beam converted from an electric signal and ejecting ink by utilizing radiation pressure.

In addition, the inkjet head used in the inkjet mode may be an on-demand mode or a continuous mode. Furthermore, an ink nozzle or the like used in recording by the inkjet mode is also not particularly limited and can be appropriately selected according to the purpose.

The inkjet mode includes a mode of injecting many small volumes of ink with a low concentration, which is referred to as photo ink, a mode of improving image quality using a plurality of inks with substantially the same hue but different concentrations, and a mode of using colorless and transparent ink.

In addition, the inkjet mode includes: a shuttle mode using a short serial head and recording while scanning is performed by the head in the width direction of a recording medium; and a line mode using a line head in which recording elements are arranged corresponding to the entire region of one side of a recording medium.

In the line mode, an image can be recorded on the entire surface of the recording medium by scanning the recording medium in a direction orthogonal to the arrangement direction of the recording elements, and this eliminates the need for a transport system, such as a carriage for scanning of the short head. This also eliminates the need for complicated scanning control of the movement of the carriage and the recording medium, and only the recording medium is moved. Thus, this can increase the recording speed as compared with the shuttle mode.

However, by utilizing multiple passes, even a lower layer of the ink layer printed on the recording medium is irradiated with a certain amount or more of active energy ray, and this makes it easier to obtain the remarkable effects of the simultaneous irradiation in the present invention. Thus, a shuttle mode is preferably employed in the present invention.

In the present invention, the surface temperature of the recording surface of the absorptive recording medium is adjusted to 35°C or higher at least at the start of Step (a); this temperature condition and the like will be described later.

### Step (b): Irradiation

Step (b) of the inkjet recording method of the present invention is performed simultaneously with Step (a). In Step (b), the absorptive recording medium with the inkjet ink applied is irradiated with an active energy ray.

The simultaneous irradiation in the present invention means starting the active energy ray irradiation simultaneously with the start of the application of the inkjet ink, or starting the active energy ray irradiation within 10 seconds after the start of the application of the inkjet ink.

More specifically, "simultaneously with the start of the application of the inkjet ink" means simultaneously performing the ejection operation of the inkjet ink and the active energy ray irradiation operation. Examples corresponding to the simultaneous irradiation in the present invention include an inkjet recording apparatus employing a shuttle mode described later, with a configuration in which an inkjet head and an active energy ray irradiation unit are provided on a carriage, and the carriage scanning is performed while the inkjet ink ejection and the active energy ray irradiation are performed simultaneously.

With the active energy ray irradiation, the polymerizable compound contained in the inkjet ink of the present invention is polymerized by the action of the polymerization initiator, and a cured film of the inkjet ink is formed. This more effectively improves the scratch resistance and blocking resistance of the image.

The inkjet ink of the present invention undergoes a curing reaction by active energy ray irradiation. This is a reaction in which the polymerization initiator contained in the inkjet ink of the present invention is decomposed by active energy ray irradiation to generate a radical, thereby initiating and promoting the polymerization reaction of the polymerizable compound and curing the inkjet ink.

When treatment is performed with a pretreatment agent containing an acidic compound, the inkjet ink is further aggregated (fixed) by the acid supplied from the acidic compound during the active energy ray irradiation, providing an effect of improving the image quality (such as scratch resistance and blocking resistance). However, as described above, in the present invention, the treatment with a pretreatment agent can be omitted.

Examples of the active energy ray include α-rays, γ-rays, electron beams, X-rays, ultraviolet light, visible light, and infrared light. As described later, the polymerization initiator preferably used in the inkjet ink of the present invention has high absorption of, particularly, light in the ultraviolet region. From this viewpoint, the emission peak wavelength of the active energy ray source for the active energy ray to be applied for irradiation is preferably in a range of 200 to 600 nm, more preferably in a range of 300 to 450 nm, and even more preferably in a range of 350 to 420 nm.

The number of the emission peak wavelengths may be one or more within the above wavelength range.

The irradiation energy of the active energy ray is 0.1 J/cm² or more, for example, particularly preferably from 0.5 to 10 J/cm². The irradiation energy not less than the above lower limit allows the polymerization reaction of the polymerizable compound to smoothly proceed, providing an even better effect of improving the coating film strength.

For the active energy ray source, a mercury lamp, a gas/solid laser, or the like is mainly utilized. For the light source used for curing an ultraviolet-curable aqueous ink, a mercury lamp, a halogen lamp, and a metal halide lamp are widely known.

However, at present, mercury-free alternatives are strongly desired from the viewpoint of environmental protection. Replacement of these light sources with a GaN-based semiconductor ultraviolet light-emitting device is industrially and environmentally very useful. In addition, an LED and a laser diode (LD) achieve a small size, a long life, high efficiency, and low cost, and are expected as a light source for a photocurable inkjet.

In the present invention, an LED and an LD can be used as the active energy ray source. In particular, a UV-LED and a UV-LD can be used as the ultraviolet light source. For example, Nichia Corporation markets a violet LED with a main emission spectrum with a wavelength between 365 nm and 420 nm.

A particularly preferred active energy ray source in the present invention is a UV-LED and is particularly preferably a UV-LED with an emission peak wavelength in a range of 350 to 420 nm.

In the present invention, from the viewpoints of cost and curability, a light-emitting diode with an emission peak wavelength in a range of 350 to 420 nm is preferably used.

For the same reason as in Step (a), the irradiation mode in Step (b), which is performed simultaneously with Step (a), is also preferably performed by a shuttle mode.

In the present invention, the surface temperature of the recording surface of the absorptive recording medium is adjusted to 35°C or higher at least at the start of Step (a), which is performed simultaneously with Step (b); this temperature condition and the like will be described below.

### Surface Temperature of Recording Surface at Start of Simultaneous Irradiation

In the inkjet recording method of the present invention, the surface temperature of the recording surface of the absorptive recording medium (which may hereinafter be referred to simply as "the surface temperature") is adjusted to 35°C or higher at the start of Step (a).

With the surface temperature of the absorptive recording medium at 35°C or higher, the method effectively volatilizes and removes a solvent (e.g., such as water and/or an aqueous medium) in the ink applied onto the absorptive recording medium, such as a fabric, and can increase the curability.

From such a viewpoint, the surface temperature of the absorptive recording medium at the start of the simultaneous irradiation is preferably 40°C or higher and more preferably 45°C or higher. On the other hand, the surface temperature is preferably 120°C or lower and more preferably 100°C or lower.

Meanwhile, the surface temperature of the absorptive recording medium at the start of the simultaneous irradiation is preferably not higher than the boiling point of the solvent with the highest content among the solvents contained in the ink. The specific temperature is preferably 120°C or lower and more preferably 100°C or lower. With the surface temperature at 120°C or lower, the method can prevent the ink on the ink ejection nozzle surface from being dried by the effect of the surface temperature of the absorptive recording medium and causing an ejection failure of the ink.

To adjust the surface temperature of the absorptive recording medium to the above range at the start of the simultaneous irradiation, the absorptive recording medium is preferably heated by a heating means at the start of the simultaneous irradiation.

The heating means is not particularly limited; for example, a hot-air heater and an infrared heater can be used. More specific examples include a ceramic heater, a halogen heater, and a quartz tube heater.

In addition, a hot plate can also be used as the heating means. A hot plate allows the recording medium to have a uniform temperature and thus is preferred.

The absorptive recording medium is preferably heated by the heating means from the opposite side to the recording surface of the absorptive recording medium because the recording surface of the absorptive recording medium is less affected.

In the inkjet recording method of the present invention, the surface temperature of the absorptive recording medium is 35°C or higher at the start of Step (a) with the simultaneous irradiation, that is, at the start of the inkjet ink application to the absorptive recording medium. However, the surface temperature may be adjusted to the above surface temperature before or after the inkjet ink application to the absorptive recording medium, that is, before or after the simultaneous irradiation, and the above surface temperature is preferably maintained in all the processes, namely, before, during, and after the application.

### Recording Medium

In the inkjet recording method of the invention, an absorptive recording medium is used as the recording medium.

In the present invention, the absorptive recording medium refers to a recording medium having a surface with high ink absorbency. More quantitatively, the absorptive recording medium is defined as a recording medium with a water absorption amount of 0.3 g/m² or more from the start of contact to 30 msec^{1/2} after the start in the Bristow method. On the other hand, the non-absorptive recording medium is defined as a recording medium with the water absorption amount less than 0.3 g/m².

Examples of the absorptive recording medium include paper, fabric, nonwoven fabric, leather, wood, or composite materials of these. Among the absorptive recording media, a fabric is preferably used because the remarkable effects by the simultaneous irradiation according to the present invention can be obtained.

The material constituting the fabric is not particularly limited, and examples include natural fibers, such as cotton, hemp, wool, and silk; synthetic fibers, such as polypropylene, polyester, acetate, triacetate, polyamide, and polyurethane; and biodegradable fibers, such as polylactic acid. The material constituting the fabric may be a mixed fiber of these.

Among these, cotton or polyester is preferred, and cotton is more preferred.

On the other hand, examples of the non-absorptive recording medium include plastic materials including polyesters, such as poly(ethylene terephthalate) (PET), and polyolefins, such as poly(vinyl chloride) (PVC), polyethylene (PE), and polypropylene (PP); glass; ceramics, metals; or composite materials of these. In the non-absorptive recording medium, as shown in the comparative examples and reference examples described later, the effects by the simultaneous irradiation according to the present invention cannot be obtained.

### Inkjet Recording Apparatus

The inkjet recording apparatus for performing the inkjet recording method of the present invention may be any of various recording apparatuses according to an inkjet recording mode. For example, the inkjet recording method of the present invention can be suitably used in a printer, a facsimile machine, a copying machine, a multifunctional printer/facsimile/copier, a three-dimensional shaping apparatus, and the like.

In the present invention, the recording apparatus is an apparatus capable of ejecting ink, any of various treatment liquids, and/or the like onto a recording medium.

The recording apparatus may include not only a head portion that ejects ink but also a means related to feeding, transport, and ejection of the recording medium, and additionally a device referred to as a pre-processing device or a post-processing device, and the like.

The recording apparatus may have a heating means or a drying means used for heating the absorptive recording medium, and an irradiation means for active energy ray irradiation. The heating means and the drying means include, for example, a means for heating and drying the printed surface and/or the back surface of the recording medium.

Examples of the irradiation means for active energy ray irradiation include a means using a light source, such as a halogen lamp, a metal halide lamp, or an LED lamp, as described above. The light source for curing the ink irradiates the ink with an active energy ray from the side of the head to cure the ink and form a printed image.

The recording apparatus is not limited to an apparatus that visualizes a significant image, such as a character or a figure, by ink. For example, the recording apparatus also includes an apparatus that forms a pattern, such as a geometric pattern, and an apparatus that shapes a three-dimensional image.

The recording apparatus includes not only a desktop type, but also a wide-format recording apparatus capable of printing on A0 size recording media, as well as a continuous form printer capable of using, for example, rolled continuous paper as a recording medium.

Unless otherwise specified, the recording mode of the recording apparatus or the irradiation mode for the active energy ray includes both a shuttle mode, in which recording or irradiation is performed while a serial head is moved, and a line mode, in which recording is performed using a line head. For a shuttle mode recording apparatus, reference can be made, for example, to JP 2022-181182 A and JP 2010-280828 A.

Among these, as described above, the recording mode of the recording apparatus or the irradiation mode for the active energy ray is preferably a shuttle mode because the remarkable effects by the simultaneous irradiation according to the present invention can be obtained. More specifically, the apparatus preferably has a configuration in which the carriage is provided with an inkjet head and an active energy ray irradiation unit.

### Inkjet Ink

The inkjet ink of the present invention contains at least a polymerizable compound, a polymerization initiator, and water. That is, in the inkjet recording method of the present invention, an ultraviolet-curable aqueous ink can be used.

### Polymerizable Compound

The polymerizable compound contained in the inkjet ink of the present invention is not particularly limited as long as it is a compound having polymerizability, and a known polymerizable monomer, polymerizable resin, polymerizable oligomer, or the like can be used. Among the above, a polymerizable oligomer is preferred, and an ultraviolet-curable oligomer is more preferred.

Specific examples of the polymerizable compound include a (meth)acrylamide compound, a (meth)acrylate compound, a vinyl compound, a maleimide compound, a vinyl sulfone compound, an N-vinylamide compound, and their derivatives. These compounds are more preferably bi- or higher functional. The polymerizable compound is more preferably a (meth)acrylamide compound, a (meth)acrylate compound, or a vinyl compound, and particularly preferably a bi- or higher functional (meth)acrylamide compound.

In the present invention, "(meth)acrylate" means acrylate or methacrylate. The same also applies to "(meth)acryloyl" and "(meth)acryl."

One of these polymerizable compounds may be used alone, or two or more of these may be used in combination. In the case of using two or more in combination, it is preferred to mix and use two or more selected from a (meth)acrylamide compound, a (meth)acrylate compound, a vinyl compound, a maleimide compound, a vinyl sulfone compound, and an N-vinylamide compound, and it is more preferred that at least one of them is a (meth)acrylamide compound.

The polymerizable compound may have a poly(ethyleneoxy) chain, a poly(propyleneoxy) chain, an ionic group (e.g., a carboxyl group or a sulfo group), a hydroxy group, or the like in the molecule from the viewpoint of improving the water solubility.

As the (meth)acrylate compound, a monofunctional (meth)acrylate compound (a compound having one (meth)acryloyl group) or a polyfunctional (meth)acrylate compound can be used, and a polyfunctional (meth)acrylate compound is preferred.

The ultraviolet-curable oligomer is not particularly limited in terms of the presence or absence of ionicity and may be nonionic or ionic (anionic, cationic, or amphoteric). Here, "nonionic" means that, for example, a hydrophilic group of the ultraviolet-curable oligomer is composed of an ether bond and/or a hydroxy group, which does not ionically dissociate in water. The "ionic (anionic, cationic, or amphoteric)" means that, for example, the ultraviolet-curable oligomer has a carboxy group or an amino group, which can ionically dissociate in water.

The ultraviolet-curable oligomer is, for example, preferably any of the following <1> to <3>.

<1> An oligomer having a structural unit derived from a compound represented by Formula (1) below: 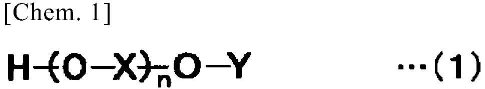 where in Formula (1), X is an alkylene group, Y is any of a (meth)acryloyl group, an allyl group, an acyl group, and a hydrogen atom, and n is an integer of 2 or more.
<2> An oligomer having a structural unit derived from a polyisocyanate compound (A), the compound (A) being a compound having 3 or more isocyanate groups per molecule.
<3> An oligomer having a structural unit derived from a polyisocyanate compound (A), a structural unit derived from a compound (B') shown below, and a structural unit derived from a compound (C') shown below.

The ultraviolet-curable oligomer of <3> above is usually produced by reacting the polyisocyanate compound (A), the compound (B'), and the compound (C').

Compound (B'): a compound containing two or more polymerizable unsaturated bonds and capable of binding to the polyisocyanate compound (A).

Compound (C'): a water-soluble compound capable of binding to the polyisocyanate compound (A).

The ultraviolet-curable oligomer preferably contains a structural unit derived from a (meth)acrylate and particularly preferably contains a structural unit derived from a polyfunctional (meth)acrylate. Furthermore, the ultraviolet-curable oligomer preferably contains a structural unit derived from a polyfunctional (meth)acrylate and a structural unit derived from a polyalkylene glycol. That is, from the viewpoint of reactivity, the compound (B') is preferably a hydroxy group-containing polyfunctional (meth)acrylate (B). From the viewpoint of water dispersibility, the compound (C') is preferably a polyalkylene glycol (C). Such an ultraviolet-curable oligomer is usually produced by reacting a polyisocyanate compound (A), a hydroxy group-containing polyfunctional (meth)acrylate (B), and a polyalkylene glycol (C).

In the present invention, the "structural unit derived from X" means a structural unit that is incorporated into the molecular structure of the ultraviolet-curable oligomer by using a compound X as a raw material and reacting the compound X with another compound. The "structural unit derived from X" is not necessarily limited to a structural unit derived from the compound X used as a raw material. That is, a structural unit formed from a raw material other than X also corresponds to the "structural unit derived from X" when the chemical structure is the same.

As described above, examples of a preferred aspect of the compound (B') include a hydroxy group-containing polyfunctional (meth)acrylate (B). A preferred aspect of the compound (B') may be a "compound (B") containing a hydroxy group and containing two or more polymerizable unsaturated bonds."

The "compound capable of binding to the polyisocyanate compound (A)" in the compound (B') may be a compound obtained by substitute the hydroxy group of the compound (B") with a carboxy group, an amino group, or the like. Examples of the polymerizable unsaturated bond include a carbon-carbon double bond and a carbon-carbon triple bond, and among these, a carbon-carbon double bond is preferred. More specific examples of the polymerizable unsaturated bond include a carbon-carbon double bond derived from a vinyl group, a (meth)acryloyl group, or the like.

The water-soluble compound in the compound (C') includes a water-soluble polymer, and specific examples include polyglycerins, polyhydroxy (meth)acrylates, polyamines, quaternary aminated polystyrenes, sulfonated polystyrenes, polyethers, and polyalkylene glycols. Among these, a polyglycerin, a polyhydroxy (meth)acrylate, or a polyalkylene glycol, which is a nonionic water-soluble compound, is preferred, and a polyalkylene glycol is particularly preferred. These water-soluble compounds may each be a copolymer.

The compound (C') has a structure of such a water-soluble compound and a structure of a "compound capable of binding to the polyisocyanate compound (A)." Here, the structure of the "compound capable of binding to the polyisocyanate compound (A)" can be selected from the same structures as those exemplified for the compound (B').

The structural unit derived from the polyisocyanate compound (A) binds to the structural unit derived from the hydroxy group-containing polyfunctional (meth)acrylate (B) and the structural unit derived from the polyalkylene glycol (C) to form a urethane bond. This urethane bond may be substituted with a urea bond or an amide bond.

In the present invention, to preferred aspects or specific aspects in the case of converting the hydroxy group-containing polyfunctional (meth)acrylate (B) into the compound (B') or the compound (B"), or in the case of converting the polyalkylene glycol (C) into the compound (C'), a preferred aspect or a specific aspect in the case of using the hydroxy group-containing polyfunctional (meth)acrylate (B) or the polyalkylene glycol (C) described later can be similarly applied.

Hereinafter, each compound constituting the ultraviolet-curable oligomer will be described. In the present invention, the "oligomer" is not a term limited to a specific molecular weight range or the like, and it is any oligomer having a structure shown below.

The inkjet ink may contain only one ultraviolet-curable oligomer or two or more ultraviolet-curable oligomers.

### Polyisocyanate Compound (A)

The polyisocyanate compound (A) is a compound having a total of two or more isocyanate groups per molecule.

The type of polyisocyanate compound (A) is not particularly limited, and examples include chain aliphatic polyisocyanates, aromatic polyisocyanates, and alicyclic polyisocyanates. Among these, the polyisocyanate compound (A) preferably contains a trimer compound of polyisocyanate from the viewpoint of weather resistance and hardness.

The chain aliphatic polyisocyanate is a compound having a chain aliphatic structure and two or more isocyanate groups. The chain aliphatic polyisocyanate is preferred from the viewpoint of weather resistance and stretchability. The chain aliphatic structure in the chain aliphatic polyisocyanate is not particularly limited but is preferably a linear or branched alkylene group having 1 or more and 12 or less carbons and preferably 1 or more and 6 or less carbons. Examples of the chain aliphatic polyisocyanate include aliphatic diisocyanates, such as tetramethylene diisocyanate, hexamethylene diisocyanate, trimethylhexamethylene diisocyanate, and dimer acid diisocyanate; or trimer compounds of these polyisocyanates.

The aromatic polyisocyanate is a compound having an aromatic structure and two or more isocyanate groups. The aromatic polyisocyanate is preferred from the viewpoint of the coating film strength. The aromatic structure in the aromatic polyisocyanate is not particularly limited but is preferably an aromatic structure having 6 or more and 13 or less carbons. Examples of the aromatic polyisocyanate include aromatic diisocyanates, such as tolylene diisocyanate, xylylene diisocyanate, diphenylmethane diisocyanate, m-phenylene diisocyanate, and naphthalene diisocyanate; or trimer compounds of these polyisocyanates.

The alicyclic polyisocyanate is a compound having an alicyclic structure and two or more isocyanate groups. The alicyclic structure in the alicyclic polyisocyanate is not particularly limited but the number of carbons is usually 5 or more, preferably 6 or more, and usually 15 or less, preferably 14 or less, more preferably 13 or less. The alicyclic structure is particularly preferably a cycloalkylene group. Examples of the alicyclic polyisocyanate include diisocyanates having an alicyclic structure, such as bis(isocyanatomethyl)cyclohexane, cyclohexane diisocyanate, bis(isocyanatocyclohexyl)methane, and isophorone diisocyanate; and trimer compounds of these polyisocyanates.

In the ultraviolet-curable oligomer, only one of these polyisocyanate compounds (A) may be used, or two or more of these may be used in combination. As the polyisocyanate compound (A), a polyisocyanate having two or more structures of a chain aliphatic structure, an aromatic structure, and an alicyclic structure can also be used.

The polyisocyanate compound (A) preferably has 3 or more and 6 or less isocyanate groups particularly from the viewpoint of adhesion to a substrate.

The polyisocyanate compound (A) is preferably a trimer obtained by a trimerization reaction of hexamethylene diisocyanate, trimethylhexamethylene diisocyanate, phenylene diisocyanate, or the like, and particularly preferably a trimer of hexamethylene diisocyanate.

### Compound Containing Polymerizable Unsaturated Bond

In the compound containing a polymerizable unsaturated bond, the number of polymerizable unsaturated bonds is preferably 1 or more, more preferably 2 or more, and even more preferably 4 or more, and preferably 8 or less and more preferably 6 or less.

The compound containing a polymerizable unsaturated bond is preferably a compound capable of binding to the polyisocyanate compound (A).

### Compound (B')

The compound (B') is a compound containing two or more polymerizable unsaturated bonds and capable of binding to the polyisocyanate compound (A).

Examples of the compound (B') include compounds having any of a hydroxy group, an amino group, and a carboxy group. Examples of the compound (B') include polyfunctional vinyl monomers, polyfunctional allyl monomers, and polyfunctional (meth)acrylates. Among these, the compound (B') is preferably a hydroxy group-containing polyfunctional (meth)acrylate (B).

### Hydroxy Group-Containing Polyfunctional (Meth)acrylate (B)

The hydroxy group-containing polyfunctional (meth)acrylate (B) has one or more hydroxy groups and two or more (meth)acryloyl groups. Specific examples include partial (meth)acrylic esters of a polyhydric alcohol. The polyfunctional (meth)acrylate having a hydroxy group forms a good crosslinked structure by the participation of a plurality of (meth)acryloyl groups in the curing reaction, and can provide good physical properties, such as stain resistance and abrasion resistance.

The number of hydroxy groups in the hydroxy group-containing polyfunctional (meth)acrylate (B) is preferably 3 or less, more preferably 2 or less, and even more preferably 1. The number of (meth)acryloyl groups in the hydroxy group-containing polyfunctional (meth)acrylate (B) is preferably 8 or less and more preferably 6 or less.

Examples of the hydroxy group-containing polyfunctional (meth)acrylate (B) include pentaerythritol tri(meth)acrylate, dipentaerythritol penta(meth)acrylate, caprolactone-modified dipentaerythritol penta(meth)acrylate, caprolactone-modified pentaerythritol tri(meth)acrylate, ethylene oxide-modified dipentaerythritol penta(meth)acrylate, ethylene oxide-modified pentaerythritol tri(meth)acrylate, 2-hydroxy-1,3-dimethacryloxypropane, and 2-hydroxy-3-acryloyloxypropyl methacrylate.

In the production of the ultraviolet-curable oligomer, only one of these hydroxy group-containing polyfunctional (meth)acrylates (B) may be used, or two or more of these may be used in combination.

The hydroxy group-containing polyfunctional (meth)acrylate (B) preferably has 1 hydroxy group and 3 or more and 5 or less (meth)acryloyl groups particularly from the viewpoint of the coating film strength of the cured film to be obtained. For example, dipentaerythritol penta(meth)acrylate or pentaerythritol tri(meth)acrylate is preferred. In particular, dipentaerythritol penta(meth)acrylate is preferred because a good crosslinked structure is formed, which increases the mechanical strength of the cured film.

### Water-Soluble Compound

### Compound (C')

The compound (C') is a water-soluble compound capable of binding to the polyisocyanate compound (A).

The compound (C') is preferably a compound containing one hydroxy end group because this provides good dispersibility.

As described above, examples of the compound (C') include water-soluble polymers, and among them, the polyalkylene glycol (C) is particularly preferred.

The polyalkylene glycol (C) is not limited, but a monosubstituted structure is preferred. That is, one hydroxy group of the glycol is preferably substituted. The substituted structure is preferably a structure that does not bind to isocyanate.

The polyalkylene glycol (C) may be a mixture of a compound with a monosubstituted structure and a compound without a monosubstituted structure.

The monosubstituted structure is not limited, but from the viewpoint of providing nonionic ultraviolet-curable oligomer, the monosubstituted structure is preferably a polyalkylene glycol-monosubstituted ether, more preferably a polyethylene glycol monosubstituted ether, a polytrimethylene glycol monosubstituted ether, or a polypropylene glycol monosubstituted ether, and even more preferably a polyethylene glycol monosubstituted ether.

The molecular weight of the polyalkylene glycol (C) (meaning the number-average molecular weight when a single molecular weight cannot be assigned) is not limited but is usually 100 or more and preferably 200 or more, and usually 5000 or less and preferably 2000 or less.

Among the polyalkylene glycol monosubstituted ethers, a polyalkylene glycol monosubstituted ether not containing an ionic substituent in the ether moiety is more preferred. For example, a compound represented by Formula (1) below is even more preferred: 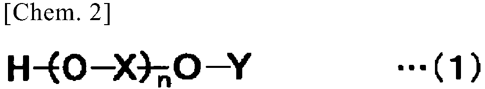 where in Formula (1), X is an alkylene group, Y is any of an alkyl group, a (meth)acryloyl group, an allyl group, an acyl group, and a hydrogen atom, and n is an integer of 2 or more.

Specific examples of the polyalkylene glycol monosubstituted ether represented by Formula (1) above include the following:
Polyalkylene glycol monosubstituted ethers in which Y is an alkyl group: polyethylene glycol monomethyl ether, polyethylene glycol lauryl ether, polyethylene glycol cetyl ether, polyethylene glycol stearyl ether, polyethylene glycol tridecyl ether, polyethylene glycol oleyl ether, polyethylene glycol octylphenyl ether, poly(oxyethylene) oleyl cetyl ether, polypropylene glycol monomethyl ether, and the like.
Polyalkylene glycol monosubstituted ethers in which Y is a (meth)acryloyl group: polyethylene glycol mono(meth)acrylate, polypropylene glycol mono(meth)acrylate, poly(ethylene glycol-propylene glycol) mono(meth)acrylate, poly(ethylene glycol-tetramethylene glycol) mono(meth)acrylate, poly(propylene glycol-tetramethylene glycol) mono(meth)acrylate, and the like.
Polyalkylene glycol monosubstituted ethers in which Y is an allyl group: polyethylene glycol monoallyl ether, polypropylene glycol monoallyl ether, poly(ethylene glycol-propylene glycol) monoallyl ether, and the like.
Polyalkylene glycol monosubstituted ethers in which Y is an acyl group: polyethylene glycol monolaurate, polypropylene glycol monolaurate, poly(ethylene glycol-propylene glycol) monolaurate, polyethylene glycol monostearate, polyethylene glycol monooleate, and the like.

Among these, X in Formula (1) is preferably an alkylene group having 1 or more and 3 or less carbons and more preferably an ethylene group, a trimethylene group, or a propylene group. From the viewpoint of pigment dispersion stability or storage stability at high temperatures, X is even more preferably an ethylene group.

From the viewpoint of the coating film strength, Y is preferably a (meth)acryloyl group, an allyl group, or an acyl group, and more preferably an allyl group.

From the viewpoint of the coating film strength of the cured film to be obtained, n in Formula (1) is usually 2 or more, preferably 5 or more, and more preferably 6 or more, and usually 500 or less, preferably 100 or less, and more preferably 50 or less.

In the production of the ultraviolet-curable oligomer, only one of these polyalkylene glycols (C) may be used, or two or more of these may be used in combination. The polyalkylene glycol (C) may be a mixture of polyalkylene glycols with different molecular weights (compounds with different n in Formula (1)).

### Average Particle Size

In the inkjet ink, the polymerizable compound is preferably present as particles, more preferably present as particles with an average particle size of 10 nm or more and 200 nm or less, and even more preferably present as particles with an average particle size of 20 nm or more and 150 nm or less. The polymerizable compound with an average particle size within the above range has good dispersion stability.

Here, the average particle size of the polymerizable compound is, for example, volume average particle size (D₅₀) measured with a particle size measuring device by a dynamic light scattering method.

In the examples described later, the average particle size of polymerizable compound particles in an aqueous dispersion of the polymerizable compound was measured. The average particle size of the polymerizable compound particles in this aqueous dispersion is approximately equal to the average particle size of the polymerizable compound particles in the ink.

In the present invention, as long as the polymerizable compound is present as particles, even when the particles are aggregated and/or another substance is contained in the particles, such states are included in the state where the polymerizable compound is "present as particles" described above.

The average particle size of the polymerizable compound means particle size (primary particle size) of the polymerizable compound particles.

Hereinafter, components other than the polymerizable compound contained in the inkjet ink of the present invention will be described.

### Colorant

The inkjet ink used in the inkjet recording method of the present invention may contain a colorant.

As the colorant used in the inkjet ink, any of various dyes or pigments known as colorants used in inks can be used, but from the viewpoints of active energy ray irradiation and long-term storage durability of printed images, a pigment is preferably used.

### Dye

The dye that can be used in the present invention is not particularly limited, and examples include water-soluble dyes, such as acid dyes, direct dyes, and reactive dyes, and disperse dyes. Among these, an anionic dye is preferred.

### Water-Soluble Dye

Examples of the water-soluble dye include azo dyes, methine dyes, azomethine dyes, xanthene dyes, quinone dyes, phthalocyanine dyes, triphenylmethane dyes, and diphenylmethane dyes.

### Pigment

As the pigment, an organic and inorganic pigment known in the art can be used. Examples include azo pigments, such as azo lake, insoluble azo pigments, condensed azo pigments, and chelate azo pigments; polycyclic pigments, such as phthalocyanine pigments, perylene and perylene pigments, anthraquinone pigments, quinacridone pigments, dioxazine pigments, thioindigo pigments, isoindolinone pigments, and quinophthalone pigments; dye lakes, such as basic dye lakes and acid dye lakes; organic pigments, such as nitro pigments, nitroso pigments, aniline black, and daylight fluorescent pigments; and inorganic pigments, such as carbon black, titanium oxide, and iron oxide-based pigments. Among these, an anionic pigment is preferred.

Only one of these dyes and pigments may be used, or two or more of these may be used in combination.

### Aqueous Medium

The inkjet ink of the present invention is an aqueous ink. The "aqueous ink" means an ink containing an aqueous medium. The aqueous medium is water and/or a water-soluble organic solvent.

The aqueous medium used in the present invention is preferably water or a mixture of water and a water-soluble organic solvent.

The water-soluble organic solvent includes a solvent that functions as a moisturizing solvent for increasing the moisture retention and wettability of the ink, and a solvent that is used as an aqueous medium for adjusting the viscosity of the ink and improving the handling properties and the ejection properties. The two are not clearly distinguished from each other, and a water-soluble organic solvent used as a moisturizing solvent also functions as an aqueous medium.

In the present invention, the water-soluble organic solvent means a compound with solubility in water. The solubility of the water-soluble organic solvent in water is not limited, but a compound that can be dissolved in water at any ratio is preferred. In addition, the water-soluble organic solvent includes any compound that can be used as a solvent by being uniformly mixed with water, even though the compound, when used alone, is difficult to have characteristics of a solvent (e.g., a compound that is solid or highly viscous at ordinary temperature).

Examples of the water-soluble organic solvent include polyhydric alcohols; ethers, such as polyhydric alcohol alkyl ethers and polyhydric alcohol aryl ethers; nitrogen-containing heterocyclic compounds; amides; amines; and sulfur-containing compounds.

Specific examples of the water-soluble organic solvent include, for example, the following:
Polyhydric alcohols, such as ethylene glycol, diethylene glycol, 1,2-propanediol, 1,3-propanediol, 1,2-butanediol, 1,3-butanediol, 1,4-butanediol, 2,3-butanediol, 3-methyl-1,3-butanediol, triethylene glycol, polyethylene glycol, polypropylene glycol, 1,2-pentanediol, 1,3-pentanediol, 1,4-pentanediol, 2,4-pentanediol, 1,5-pentanediol, 1,2-hexanediol, 1,6-hexanediol, 1,3-hexanediol, 2,5-hexanediol, 1,5-hexanediol, glycerin, 1,2,6-hexanetriol, 2-ethyl-1,3-hexanediol, ethyl-1,2,4-butanetriol, 1,2,3-butanetriol, 2,2,4-trimethyl-1,3-pentanediol, and 3-methyl-1,3,5-pentanetriol;
Polyhydric alcohol alkyl ethers, such as ethylene glycol monoethyl ether, ethylene glycol monobutyl ether, diethylene glycol monomethyl ether, diethylene glycol monoethyl ether, diethylene glycol monobutyl ether, tetraethylene glycol monomethyl ether, propylene glycol monomethyl ether, and propylene glycol monoethyl ether;
Polyhydric alcohol aryl ethers, such as ethylene glycol monophenyl ether and ethylene glycol monobenzyl ether;
Nitrogen-containing heterocyclic compounds, such as 2-pyrrolidone, N-methyl-2-pyrrolidone, N-hydroxyethyl-2-pyrrolidone, 1,3-dimethyl-2-imidazolidinone, ε-caprolactam, and γ-butyrolactone;
Amides, such as formamide, N-methylformamide, N,N-dimethylformamide, 3-methoxy-N,N-dimethylpropionamide, and 3-butoxy-N,N-dimethylpropionamide;
Amines, such as monoethanolamine, diethanolamine, and triethylamine;
Sulfur-containing compounds, such as dimethyl sulfoxide, sulfolane, and thiodiethanol; and
Propylene carbonate and ethylene carbonate.

As the water-soluble organic solvent, an organic solvent having a boiling point of 250°C or lower is preferably used because not only the organic solvent functions as a moisturizing solvent but also good drying properties are obtained.

As the water-soluble organic solvent, a polyol compound having 8 or more carbons and a glycol ether compound are also suitably used.

Specific examples of the polyol compound having 8 or more carbons include 2-ethyl-1,3-hexanediol and 2,2,4-trimethyl-1,3-pentanediol.

Specific examples of the glycol ether compound include polyhydric alcohol alkyl ethers, such as ethylene glycol monoethyl ether, ethylene glycol monobutyl ether, diethylene glycol monomethyl ether, diethylene glycol monoethyl ether, diethylene glycol monobutyl ether, diethylene glycol monoisobutyl ether, tetraethylene glycol monomethyl ether, and propylene glycol monoethyl ether; and polyhydric alcohol aryl ethers, such as ethylene glycol monophenyl ether and ethylene glycol monobenzyl ether.

Only one of these water-soluble organic solvents may be used, or two or more may be mixed and used.

### Polymerization Initiator

The inkjet ink of the present invention contains a polymerization initiator.

The polymerization initiator is a photoradical polymerization initiator that generates radicals, which are active species, by the energy of light (ultraviolet light) received due to active energy ray irradiation and initiates photopolymerization of the polymerizable compound. Thus, the ink present on the surface of the recording medium is cured, and an image can be formed.

The polymerization initiator may be contained in the ink in a state of not being incorporated within the polymerizable compound or may be contained in the ink in a state of being incorporated in the particles of the polymerizable compound. Furthermore, the polymerization initiator may be contained in both of these states.

The polymerization initiator may be a fat-soluble polymerization initiator (which may hereinafter be referred to as a "fat-soluble initiator") or a water-soluble polymerization initiator (which may hereinafter be referred to as a "water-soluble initiator").

Here, the "fat-soluble initiator" refers to a polymerization initiator that is compatible with the polymerizable compound, such as an ultraviolet-curable oligomer, and is dissolved in an organic solvent. The "water-soluble initiator" refers to an initiator that is dissolved in water in an amount of 1 mass% or more. The same applies to a "fat-soluble sensitizer" and a "water-soluble sensitizer" described later.

Examples of the polymerization initiator used in the present invention include, but are not limited to, aromatic ketones, acylphosphine oxide compounds, aromatic onium salt compounds, organic peroxides, thio compounds (thioxanthone compounds, thiophenyl group-containing compounds), α-aminoalkylphenone compounds, hexaarylbiimidazole compounds, ketoxime ester compounds, borate compounds, azinium compounds, metallocene compounds, active ester compounds, compounds having a carbon-halogen bond, and alkylamine compounds.

Among these, the polymerization initiator preferably contains at least one of an acylphosphine oxide compound and a thioxanthone compound. Using such a polymerization initiator tends to be able to provide even better curability of the ink.

Examples of the fat-soluble polymerization initiator include, but are not limited to, acetophenone, 2,2-diethoxyacetophenone, p-dimethylaminoacetophenone, benzophenone, 2-chlorobenzophenone, p,p'-dichlorobenzophenone, p,p'-bisdiethylaminobenzophenone, Michler's ketone, benzyl, benzoin, benzoin methyl ether, benzoin ethyl ether, benzoin isopropyl ether, benzoin-n-propyl ether, benzoin isobutyl ether, benzoin-n-butyl ether, benzyl methyl ketal, 2,2-dimethoxy-1,2-diphenylethan-1-one, 1-hydroxycyclohexyl phenyl ketone, 2-hydroxy-1-{4-[4-(2-hydroxy-2-methylpropionyl)benzyl]phenyl}-2-methylpropan-1-one, 2-benzyl-2-dimethylamino-1-(4-morpholinophenyl)butanone-1,2-dimethylamino-2-(4-methylbenzyl)-1-(4-morpholin-4-yl-phenyl)butan-1-one, 2,4,6-trimethylbenzoyl diphenylphosphine oxide, bis(2,4,6-trimethylbenzoyl) phenylphosphine oxide, bis(2,6-dimethoxybenzoyl)-2,4,4-trimethylpentylphosphine oxide, 2-methyl-1-[4-(methylthio)phenyl]-2-morpholinopropan-1-one, thioxanthone, 2-chlorothioxanthone, 2-methylthioxanthone, 2-isopropylthioxanthone, 4-isopropylthioxanthone, 2-hydroxy-2-methyl-1-phenyl-1-one, 1-(4-isopropylphenyl)-2-hydroxy-2-methylpropan-1-one, methyl benzoylformate, azobisisobutyronitrile, benzoyl peroxide, and di-tert-butyl peroxide.

Examples of the water-soluble polymerization initiator include, but are not limited to, 1-[4-(2-hydroxyethoxy)-phenyl]-2-hydroxy-2-methyl-1-propan-1-one, sodium phenyl(2,4,6-trimethylbenzoyl) phosphinate, and 2-(3-dimethylamino-2-hydroxypropoxy)-3,4-dimethyl-9H-thioxanthon-9-one methochloride.

Examples of commercially available products of the polymerization initiator include GENOPOL TX-2 available from RAHN; and Irgacure (trade name) 369, Irgacure (trade name) 500, and Irgacure (trade name) 2959 available from BASF Japan Ltd.

One of these polymerization initiators may be used alone, or two or more of these may be used in combination. For example, a fat-soluble initiator and a water-soluble initiator may be used in combination, the fat-soluble initiator may be incorporated in the particles of the polymerizable compound, such as an ultraviolet-curable oligomer, and the water-soluble initiator may be dissolved in an aqueous medium.

As the polymerization initiator, a thermal radical polymerization initiator may be used in combination in addition to the photoradical polymerization initiator as described above.

### Surfactant

The inkjet ink of the present invention preferably contains a surfactant for the flatness of the coating film to be formed and the wettability with the substrate.

As the surfactant, any of a silicone-based surfactant, a fluorine-based surfactant, an amphoteric surfactant, a nonionic surfactant, and an anionic surfactant can be used.

The silicone-based surfactant is not particularly limited and can be appropriately selected according to the purpose. Among them, a silicone-based surfactant that does not decompose even at high pH is preferred, and examples include side chain-modified polydimethylsiloxanes, both terminal-modified polydimethylsiloxanes, one terminal-modified polydimethylsiloxanes, and side chain-both terminal-modified polydimethylsiloxanes. A silicone-based surfactant having a poly(oxyethylene) group or a poly(oxyethylene) poly(oxypropylene) group as a modifying group exhibits good properties as an aqueous surfactant and thus is particularly preferred. As the silicone-based surfactant, a polyether-modified silicone-based surfactant can also be used. Examples of the polyether-modified silicone-based surfactant include a compound in which a polyalkylene oxide structure is introduced into a side chain of a Si portion of dimethylsiloxane.

The fluorine-based surfactant is preferably a compound having 2 or more and 16 or less fluorine-substituted carbons and more preferably a compound having 4 or more and 16 or less fluorine-substituted carbons.

The fluorine-based surfactant is, for example, preferably a perfluoroalkyl sulfonic acid compound, a perfluoroalkyl carboxylic acid compound, a perfluoroalkyl phosphate ester compound, a perfluoroalkyl alkylene oxide adduct, and a polyoxyalkylene ether polymer compound having a perfluoroalkyl ether group in a side chain because of low foamability.

Examples of the perfluoroalkyl sulfonic acid compound include perfluoroalkyl sulfonic acids and perfluoroalkyl sulfonate salts.

Examples of the perfluoroalkyl carboxylic acid compound include perfluoroalkyl carboxylic acids and perfluoroalkyl carboxylate salts.

Examples of the perfluoroalkyl phosphate ester compound include perfluoroalkyl phosphate esters and perfluoroalkyl phosphate ester salts.

Examples of the perfluoroalkyl alkylene oxide adduct include perfluoroalkyl ethylene oxide adducts.

Examples of the polyoxyalkylene ether polymer compound having a perfluoroalkyl ether group in a side chain include sulfate ester salts of a polyoxyalkylene ether polymer having a perfluoroalkyl ether group in a side chain, and salts of a polyoxyalkylene ether polymer having a perfluoroalkyl ether group in a side chain.

Examples of the counter ion of the salt in these fluorine-based surfactants include Li, Na, K, NH₄, NH₃CH₂CH₂OH, NH₂(CH₂CH₂OH)₂, and NH(CH₂CH₂OH)₃.

Among these, a polyoxyalkylene ether polymer compound having a perfluoroalkyl ether group in a side chain is more preferred because of particularly low foamability, and fluorine-based surfactants represented by Formulas (3A) and (3B) below are particularly preferred.

CF₃CF₂(CF₂CF₂)ₛ-CH₂CH₂O(CH₂CH₂O)ₜH (3A)

In the compound represented by Formula (3A), to impart water solubility, s is preferably an integer of 0 or more and 10 or less, and t is preferably an integer of 0 or more and 40 or less.

CᵣF_{2r + 1}-CH₂CH(OH)CH₂-O-(CH₂CH₂O)_{c}-Z (3B)

In the compound represented by Formula (3B), Z is H, C_{d}F_{2d + 1} (d is an integer of 1 or more and 6 or less), CH₂CH(OH)CH₂-CₑF_{2e + 1} (e is an integer of 4 or more and 6 or less), or C_{f}H_{2f + 1} (f is an integer of 1 or more and 19 or less).

r is an integer of 1 or more and 6 or less, and c is an integer of 4 or more and 14 or less.

As the fluorine-based surfactant, a commercially available product can be used. Examples of the commercially available product include Surflon (trade name) S-111, S-112, S-113, S-121, S-131, S-132, S-141, and S-145 (all available from Asahi Glass Co., Ltd.); Fluorad FC-93, FC-95, FC-98, FC-129, FC-135, FC-170C, FC-430, and FC-431 (all available from Sumitomo 3M Ltd.); Megaface F-470, F-1405, and F-474 (all available from DIC Corporation); Zonyl TBS, FSP, FSA, FSN-100, FSN, FSO-100, FSO, FS-300, and UR (all available from DuPont); FT-110, FT-250, FT-251, FT-400S, FT-150, FT-400SW (all available from Neos Corporation); Polyfox PF-136A, PF-156A, PF-151N, PF-154, and PF-159 (available from OMNOVA Solutions); Neugen FN-1287 (available from DKS Co. Ltd.); UNIDYNE DSN-403N (available from Daikin Industries, Ltd.); and LE-604, LE-605, LE-606, and LE-607 (available from Kyoeisha Chemical Co., Ltd.).

Examples of the amphoteric surfactant include lauryl aminopropionate salts, lauryl dimethyl betaine, stearyl dimethyl betaine, and lauryl dihydroxyethyl betaine.

Examples of the nonionic surfactant include poly(oxyethylene) alkylphenyl ethers, poly(oxyethylene) alkyl esters, poly(oxyethylene) alkylamines, poly(oxyethylene) alkylamides, poly(oxyethylene) propylene block polymers, sorbitan fatty acid esters, poly(oxyethylene) sorbitan fatty acid esters, acetylene alcohol derivatives, and acetylene glycol derivatives.

Examples of the anionic surfactant include poly(oxyethylene) alkyl ether acetate salts, dodecylbenzene sulfonate salts, laurate salts, and salts of a poly(oxyethylene) alkyl ether sulfate.

One of these may be used alone, or two or more of these may be used in combination.

As described above, the silicone-based surfactant is not particularly limited and can be appropriately selected according to the purpose. A polyether-modified silicone-based surfactant having a poly(oxyethylene) group or a poly(oxyethylene) poly(oxypropylene) group as a modifying group exhibits good properties as an aqueous surfactant and thus is particularly preferred.

As such a surfactant, an appropriately synthesized product may be used, or a commercially available product may be used. The commercially available product can be obtained, for example, from BYK, Shin-Etsu Chemical Co., Ltd., Dow Corning Toray Silicone Co., Ltd., Nihon Emulsion Co., Ltd., and Kyoeisha Chemical Co., Ltd.

The polyether-modified silicone-based surfactant is not particularly limited and can be appropriately selected according to the purpose. Examples include a compound represented by Formula (2) below, in which a polyalkylene oxide structure is introduced into a side chain of a Si portion of dimethylpolysiloxane.

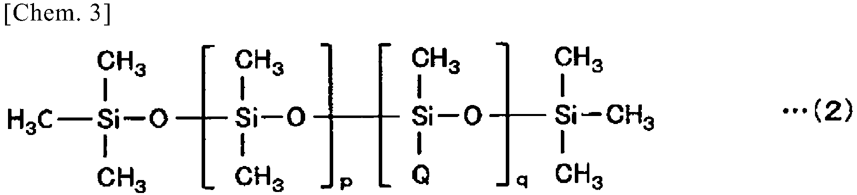

Q=-R(C₂H₄O)ₐ(C₃H₆O)_{b}R'

where in Formula (2), p, q, a, and b represent integers, and R and R' represent a hydrocarbon group.

As the polyether-modified silicone-based surfactant, a commercially available product can be used. Examples of the commercially available product include KF-618, KF-642, and KF-643 (Shin-Etsu Chemical Co., Ltd.); SAG001, SAG002, SAG003, SAG005, SAG503, and SAG008 (Nissin Chemical Co., Ltd.); EMALEX-SS-5602 and SS-1906EX (Nihon Emulsion Co., Ltd.); FZ-2105, FZ-2118, FZ-2154, FZ-2161, FZ-2162, FZ-2163, and FZ-2164 (Dow Corning Toray Silicone Co., Ltd.); BYK-33 and BYK-387 (BYK); and TSF4440, TSF4452, and TSF4453 (Toshiba Silicone Co., Ltd.).

### Sensitizer

The inkjet ink of the present invention may contain a sensitizer. A sensitizer, when present together with a polymerization initiator in the ink, absorbs an active energy ray and becomes excited. Upon contact with the polymerization initiator, the excited sensitizer promotes the decomposition of the polymerization initiator, enabling a more sensitive curing reaction.

The sensitizer may be fat-soluble or water-soluble as in the case of the polymerization initiator. The fat-soluble sensitizer can be incorporated in the particles of the polymerizable compound, such as an ultraviolet-curable oligomer.

Examples of the sensitizer include aliphatic amines; amines having an aromatic group; or cyclic amine-based compounds, such as piperidine; thioxanthone compounds; alkoxyanthracene compounds; and urea-based compounds, such as o-tolylthiourea; sulfur compounds, such as sodium diethylthiophosphate or soluble salts of an aromatic sulfinic acid; nitrile compounds, such as N,N'-disubstituted-p-aminobenzonitrile; phosphorus compounds, such as tri-n-butylphosphine or sodium diethyldithiophosphate; Michler's ketone; N-nitrosohydroxylamine derivatives; and nitrogen compounds, such as oxazolidine compounds, tetrahydro-1,3-oxazine compounds, and condensates of formaldehyde or acetaldehyde and a diamine.

Only one of these sensitizers may be used, or two or more of these may be used in combination.

### Additional Resin Component

The inkjet ink of the present invention can contain an optional oligomer component besides the polymerizable compound, an optional resin component, or an optional monomer component (these are collectively referred to as "additional resin components") as necessary in addition to the above components. An additional resin component may be incorporated in the particles of the polymerizable compound or may be dissolved in an aqueous medium. An additional resin component may be dispersed alone in the ink or may be formed into a composite with another component.

### Additional Additive

The inkjet ink of the present invention can contain an additional additive as necessary in addition to the above components.

Examples of the additional additive include known additives, such as an anti-fading agent, an emulsion stabilizer, a penetration enhancer, an ultraviolet absorber, a preservative, an antifungal agent, a rust inhibitor, a pH adjuster, a viscosity modifier, a dispersant, a dispersion stabilizer, an antifoaming agent, a solid wetting agent, and a chelating agent. Any of these various additives may be added directly after the ink is prepared or during its preparation.

For the additional additives, reference can appropriately be made to the description in paragraphs 0088 to 0096 of JP 2010-065205 A and the description in paragraphs 0083 to 0090 of JP 2010-070669 A.

### Content of Each Component

The content of water in the inkjet ink of the present invention is not particularly limited and can be appropriately selected according to the purpose. From the viewpoints of drying properties and ejection reliability of the ink, the content of water in the inkjet ink of the present invention is usually 10 mass% or more, preferably 20 mass% or more, and more preferably 40 mass% or more, and usually 90 mass% or less and preferably 80 mass% or less.

For the inkjet ink of the present invention containing a water-soluble organic solvent, the content (total content of the water-soluble organic solvent used also as a moisturizing solvent and the water-soluble organic solvent used as an aqueous medium) is not particularly limited and can be appropriately selected according to the type and purpose of the water-soluble organic solvent used. From the viewpoints of drying properties, ejection reliability, wettability with a substrate, and the like, the content of the water-soluble organic solvent is usually 10 mass% or more, and usually 50 mass% or less and preferably 40 mass% or less.

The content of a volatile component relative to a total amount of the inkjet ink of the present invention is preferably 70 mass% or more and more preferably 75 mass% or more, and preferably 95 mass% or less and more preferably 90 mass% or less.

The content of a volatile component not less than the above lower limit provides high ejection reliability, and the content not more than the above upper limit can provide increased coating film strength.

The volatile component in the inkjet ink of the present invention refers to a component that is reduced by 90% or more after 1 g of the inkjet ink is placed on an aluminum dish with a diameter of 10 cm and dried at 80°C for 4 hours compared to before drying.

From the viewpoints of drying properties and ejection reliability, the inkjet ink of the present invention is prepared so that the concentration of total solid content, which is components other than the aqueous medium, which is water and/or a water-soluble organic solvent, is usually 5 mass% or more, preferably 7 mass% or more, and more preferably 9 mass% or more, and usually 30 mass% or less, preferably 25 mass% or less, more preferably 20 mass% or less, and even more preferably 15 mass% or less.

In the case of using a mixed liquid of water and a water-soluble organic solvent as the aqueous medium, from the viewpoint of improving the drying properties and the ejection properties, the ratio of water to the water-soluble organic solvent (total of a water-soluble organic solvent used also as a moisturizing solvent and a water-soluble organic solvent used as the aqueous medium) is preferably such that the ratio of water to the water-soluble organic solvent is usually from 1:0.05 to 1:1.5 (mass ratio), preferably from 1:0.1 to 1:1.2 (mass ratio), and more preferably from 1:0.15 to 1:1.1 (mass ratio).

From the viewpoints of the performance of the printed coating film to be obtained and the active energy ray curability, the content of the polymerizable compound in the inkjet ink of the present invention is usually 3 mass% or more, preferably 5 mass% or more, and more preferably 7 mass% or more. On the other hand, from the viewpoint of ejection stability, the content of the polymerizable compound in the inkjet ink of the present invention is usually 20 mass% or less, preferably 15 mass% or less, and more preferably 12 mass% or less.

From the same viewpoints, the content of the polymerizable compound in the total solid content of the inkjet ink of the present invention is usually 30 mass% or more, preferably 50 mass% or more, and more preferably 60 mass% or more, and usually 90 mass% or less, preferably 85 mass% or less, and more preferably 80 mass% or less.

From the viewpoints of improvement of image density, good fixability, and ejection stability, the content of the colorant in the inkjet ink of the present invention is usually 0.1 mass% or more and preferably 1 mass% or more, and usually 8 mass% or less and preferably 6 mass% or less.

From the same viewpoints, the content of the colorant in the total solid content of the inkjet ink of the present invention is usually 1 mass% or more and preferably 5 mass% or more, and usually 40 mass% or less and preferably 30 mass% or less.

The content of the polymerization initiator in the inkjet ink of the present invention is usually 0.05 mass% or more, preferably 0.1 mass% or more, more preferably 0.3 mass% or more, and even more preferably 0.4 mass% or more, and usually 8 mass% or less, preferably 5 mass% or less, more preferably 3 mass% or less, even more preferably 2 mass% or less, and particularly preferably 1 mass% or less. The content of the polymerization initiator within this range allows sufficient improvement in the curing rate and prevention of incomplete dissolution of the polymerization initiator and discoloration due to the polymerization initiator.

From the same viewpoints, the content of the polymerization initiator in the total solid content of the inkjet ink of the present invention is usually 0.5 mass% or more, preferably 1 mass% or more, more preferably 2 mass% or more, and even more preferably 3 mass% or more, and usually 20 mass% or less, more preferably 15 mass% or less, even more preferably 10 mass% or less, and particularly preferably 8 mass% or less.

For the inkjet ink of the present invention containing a surfactant, its content is not particularly limited and can be appropriately selected according to the purpose. From the viewpoints of excellent wettability and ejection stability, and improvement in image quality, the content of the surfactant in the ink is usually 0.001 mass% or more, preferably 0.01 mass% or more, and more preferably 0.03 mass% or more, and usually 5 mass% or less, preferably 3 mass% or less, and more preferably 1 mass% or less.

From the same viewpoints, the content of the surfactant in the total solid content of the inkjet ink of the present invention is usually 0.01 mass% or more, preferably 0.1 mass% or more, and more preferably 0.2 mass% or more, and usually 10 mass% or less, preferably 5 mass% or less, and more preferably 3 mass% or less.

For the inkjet ink of the present invention containing a sensitizer, its content is usually 0.01 mass% or more, preferably 0.03 mass% or more, and more preferably 0.05 mass% or more, and usually 4 mass% or less, preferably 3 mass% or less, more preferably 1 mass% or less, and even more preferably 0.7 mass% or less. With the content of the sensitizer in the above range, the effect of the sensitizer can be sufficiently obtained.

From the same viewpoint, the content of the sensitizer in the total solid content of the inkjet ink of the present invention is usually 0.05 mass% or more, preferably 0.1 mass% or more, more preferably 0.3 mass% or more, and even more preferably 0.5 mass% or more, and usually 8 mass% or less, preferably 6 mass% or less, and more preferably 5 mass% or less.

### Viscosity of Inkjet Ink

The viscosity of the inkjet ink of the present invention at 25°C is preferably 25 mPa·sec or less, more preferably 20 mPa·sec or less, and even more preferably 10 mPa·sec or less. The lower limit value of the viscosity of the inkjet ink of the present invention at 25°C is not particularly limited but is preferably 1 mPa·sec or more, more preferably 2 mPa·sec or more, and even more preferably 5 mPa·sec or more.

The viscosity of the inkjet ink can be measured using a digital viscometer DV-I+ available from BROOKFIELD.

### Application

The inkjet ink of the present invention used in the inkjet recording method of the present invention is aqueous and thus has excellent environmental and safety properties. According to the inkjet recording method of the present invention, a printed coating film with excellent coating film properties can be formed by using the aqueous ink with such excellent environmental and safety properties. Thus, the inkjet recording method of the present invention can be suitably used for various applications including cloth for clothing, such as T-shirts; textiles; wallpaper for interior; and home furnishings.

### Examples

Hereinafter, examples of the present invention will be described. However, the present invention is not limited to these examples.

### Preparation of Ink

### Preparation of Aqueous Dispersion of Polymerizable Compound

A polymerizable compound (nonionic ultraviolet-curable oligomer) was produced by reacting 0.4 mol of a trimer of hexamethylene diisocyanate, 0.8 mol of dipentaerythritol pentaacrylate, and 0.4 mol of polyethylene glycol monoallyl ether (n = 30 to 40 in Formula (1)).

To 20 parts by mass of the polymerizable compound, 2 parts by mass of a fat-soluble initiator (GENOPOL TX-2 available from RAHN) was added. While the mixture was being stirred with the temperature maintained at 60°C, deionized water heated to 60°C in advance was added dropwise until the solid content concentration reached 20 mass%, and an aqueous dispersion with a solid content concentration of 20 mass% was obtained.

The average particle size (D₅₀) of the ultraviolet-curable oligomer particles in this aqueous dispersion was measured using a particle size distribution analyzer MICROTRAC WAVEII-EX150 (available from MicrotracBEL Corp.) and was found to be 29 nm.

### Preparation of Ink 1

Deionized water; the aqueous dispersion of the polymerizable compound (solid content concentration 20 mass%); propylene glycol (PG) and diethylene glycol ethyl methyl ether (EM) as water-soluble organic solvents; a water-soluble initiator 1; a water-soluble sensitizer 1; BYK-347 available from BYK Japan KK as a surfactant; and EMACOL SF CYAN AE2034F (described as "Cy" in Table 1) available from Sanyo Color Works, Ltd. as a pigment dispersion were used, added, and mixed so as to give the composition ratio shown in Table 1, and an ink 1 was obtained.

The viscosity of the ink 1 at 25°C was 6.5 mPa·s. In the ink 1, the content of water was 65 mass%, and the content of volatile components was 85 mass%.

### Preparation of Inks 2 to 4

Inks 2 to 4 were obtained in the same manner as the ink 1 except for using the following pigment dispersions and changing the type and blending proportion of the pigment dispersion as well as the blending proportion of the water-soluble sensitizer as shown in Table 1 below.

Pigment dispersion: EMACOL SF MAGENTA AG2172F (described as "Ma" in Table 1) available from Sanyo Color Works, Ltd.

Pigment dispersion: EMACOL SF YELLOW AG2242F (described as "Ye" in Table 1) available from Sanyo Color Works, Ltd.

Pigment dispersion: EMACOL SF BLACK AE2078F (described as "Bk" in Table 1) available from Sanyo Color Works, Ltd.

The viscosity at 25°C, the content of water, and the content of volatile components in each of the inks 2 to 4 were as follows.
Ink 2: Viscosity = 7.2 mPa·s
   Content of water = 64 mass%
   Content of volatile components = 84 mass%
Ink 3: Viscosity = 6.4 mPa·s
   Content of water = 66 mass%
   Content of volatile components = 86 mass%
Ink 4: Viscosity = 6.2 mPa·s
   Content of water = 65 mass%
   Content of volatile components = 85 mass%

The content proportion of each component in Table 1 indicates the content ratio of the component contained in the aqueous dispersion or solution when the component is in the form of an aqueous dispersion or solution.

**[Table 1]**

| | Ink composition liquid (mass%) | | | | | | | | | | | |
|---|---|---|---|---|---|---|---|---|---|---|---|---|
| | Pigment | | | | Polymerizable compound | Water-soluble organic solvent | | Fat-soluble initiator | Water-soluble initiator | Water-soluble sensitizer | Surfactant | Water |
| | Cy | Ma | Ye | Bk | | PG | EM | | | | | |
| Ink 1 | 3 | | | | 10 | 10 | 10 | 0.1 | 0.5 | 0.1 | 0.12 | Residue |
| Ink 2 | | 3.5 | | | 10 | 10 | 10 | 0.1 | 0.5 | 0.3 | 0.12 | Residue |
| Ink 3 | | | 2.5 | | 10 | 10 | 10 | 0.1 | 0.5 | 0.3 | 0.12 | Residue |
| Ink 4 | | | | 2.5 | 10 | 10 | 10 | 0.1 | 0.5 | 0.5 | 0.12 | Residue |

### Example 5

The ink 1 as an inkjet ink and a cotton fabric as a recording medium were set in a commercially available shuttle mode UV inkjet printer. At this time, a hot plate was placed on the flatbed, and the recording medium was set on the hot plate. Under the following print settings, simultaneously with the application of the ink 1 to the recording medium, the recording medium was irradiated with an active energy ray, and a printed coating film was obtained.

### Print Settings

Resolution: 600 × 720 dpi
Number of passes: 16 passes
Image: 5 × 16.5 cm Solid image

As the active energy ray source, an LED with an emission peak wavelength at 385 nm was used. The irradiance, cumulative light amount, and heater temperature were set to the conditions shown in Table 2. The irradiance and the cumulative light amount were measured using a UV intensity integrable power meter ("H12684" available from Hamamatsu Photonics K.K.).

### Examples 6 to 8, Comparative Examples 1 to 20, and Reference Examples 1 to 7

Printed coating films were obtained in the same manner as in Example 5 except for changing the type of ink, the type of recording medium, the irradiance and cumulative light amount of the active energy ray, the timing of the active energy ray irradiation, and the heater temperature as shown in Table 2.

The (illumination) PET used as the recording medium is a surfacetreated, non-absorptive illumination transparent film composed of poly(ethylene terephthalate).

The heater temperature corresponds to the surface temperature of the recording medium. Room temperature is a temperature of 20 to 30°C.

In Table 2, "simultaneously with printing" indicates that the simultaneous irradiation was performed according to the present invention. "After printing" indicates that the active energy ray irradiation was performed after the completion of Step (a).

### Evaluation of Coating Film Strength

The printed coating films obtained in examples, comparative examples, and reference examples were evaluated for coating film strength by the following methods.

### Evaluation of Coating Film Strength (Cotton)

For the printed coating films obtained in Examples 5 to 8, Comparative Examples 1 to 8 and 17 to 20, the substrate was scrubbed while the printed coating film was wetted with running water, and the change in density before and after washing was visually observed and evaluated as follows. The evaluation results are shown in Table 2.
∘: The change in image density is small, and there is no problem in practical use.
Δ : The change in image density is large, but the number of white spots is small.
× : The change in image density is large, the number of white spots is also large, and thus there is a problem in practical use.

### Evaluation of Coating Film Strength (Illumination PET)

The printed coating films of the illumination PET obtained in Comparative Examples 9 to 16 and Reference Examples 1 to 7 were each rubbed with a cotton swab that was immersed in water, and color transfer to the cotton swab was visually observed and evaluated as follows. The evaluation results are shown in Table 2.
○: No color was transferred even by rubbing with water.
×: Color was transferred by rubbing with water, or the printed coating film was peeled off.

**[Table 2]**

| | Ink | Recording medium | Irradiance (W/cm²) | Cumulative light amount (J/cm²) | Irradiation timing | Heater temperature | Coating film strength |
|---|---|---|---|---|---|---|---|
| Comparative Example 17 | Ink 1 | Cotton | 1 | 2 | Simultaneously with printing | Room temperature | Δ |
| Comparative Example 18 | Ink 2 | Cotton | 1 | 2 | Simultaneously with printing | Room temperature | Δ |
| Comparative Example 19 | Ink 3 | Cotton | 1 | 2 | Simultaneously with printing | Room temperature | Δ |
| Comparative Example 20 | Ink 4 | Cotton | 1 | 2 | Simultaneously with printing | Room temperature | Δ |
| Example 5 | Ink 1 | Cotton | 1 | 2 | Simultaneously with printing | 40°C | ○ |
| Example 6 | Ink 2 | Cotton | 1 | 2 | Simultaneously with printing | 40°C | ○ |
| Example 7 | Ink 3 | Cotton | 1 | 2 | Simultaneously with printing | 40°C | ○ |
| Example 8 | Ink 4 | Cotton | 1 | 2 | Simultaneously with printing | 40°C | ○ |
| Comparative Example 1 | Ink 1 | Cotton | 1 | 2 | After printing | Room temperature | × |
| Comparative Example 2 | Ink 2 | Cotton | 1 | 2 | After printing | Room temperature | × |
| Comparative Example 3 | Ink 3 | Cotton | 1 | 2 | After printing | Room temperature | × |
| Comparative Example 4 | Ink 4 | Cotton | 1 | 2 | After printing | Room temperature | × |
| Comparative Example 5 | Ink 1 | Cotton | 1 | 2 | After printing | 40°C | × |
| Comparative Example 6 | Ink 2 | Cotton | 1 | 2 | After printing | 40°C | × |
| Comparative Example 7 | Ink 3 | Cotton | 1 | 2 | After printing | 40°C | × |
| Comparative Example 8 | Ink 4 | Cotton | 1 | 2 | After printing | 40°C | × |
| Comparative Example 9 | Ink 1 | (Illumination) PET | 1 | 2 | Simultaneously with printing | Room temperature | × |
| Comparative Example 10 | Ink 2 | (Illumination) PET | 1 | 2 | Simultaneously with printing | Room temperature | × |
| Comparative Example 11 | Ink 3 | (Illumination) PET | 1 | 2 | Simultaneously with printing | Room temperature | × |
| Comparative Example 12 | Ink 4 | (Illumination) PET | 1 | 2 | Simultaneously with printing | Room temperature | × |
| Comparative Example 13 | Ink 1 | (Illumination) PET | 1 | 2 | Simultaneously with printing | 40°C | × |
| Comparative Example 14 | Ink 2 | (Illumination) PET | 1 | 2 | Simultaneously with printing | 40°C | × |
| Comparative Example 15 | Ink 3 | (Illumination) PET | 1 | 2 | Simultaneously with printing | 40°C | × |
| Comparative Example 16 | Ink 4 | (Illumination) PET | 1 | 2 | Simultaneously with printing | 40°C | × |
| Reference Example 1 | Ink 1 | (Illumination) PET | 1 | 2 | After printing | Room temperature | ○ |
| Reference Example 2 | Ink 2 | (Illumination) PET | 1 | 2 | After printing | Room temperature | ○ |
| Reference Example 3 | Ink 3 | (Illumination) PET | 1 | 2 | After printing | Room temperature | ○ |
| Reference Example 4 | Ink 1 | (Illumination) PET | 1 | 2 | After printing | 40°C | ○ |
| Reference Example 5 | Ink 2 | (Illumination) PET | 1 | 2 | After printing | 40°C | ○ |
| Reference Example 6 | Ink 3 | (Illumination) PET | 1 | 2 | After printing | 40°C | ○ |
| Reference Example 7 | Ink 4 | (Illumination) PET | 1 | 2 | After printing | 40°C | ○ |

The results in Table 2 found that according to the inkjet recording method of the present invention, a printed image with excellent coating film strength can be formed.

In contrast, in Comparative Examples 1 to 8, in which the active energy ray was applied for irradiation after the ink application, and in Comparative Examples 17 to 20, in which the surface temperature of the recording surface of the absorptive recording medium was lower than 35°C, the coating film strength was poor.

In Comparative Examples 9 to 16, in which the non-absorptive recording medium, such as (illumination) PET, was irradiated with the active energy ray simultaneously with the application of the ink, the separation of the curing components due to the penetration does not occur. Thus, the effects of the simultaneous irradiation according to the present invention were not obtained.

From Reference Examples 1 to 7, it was found that in a case of the non-absorptive recording medium, such as (illumination) PET, the problem of a decrease in the coating film strength does not occur even when the active energy ray is applied for irradiation after printing. That is, the problems solved by the present invention are considered to be peculiar to the case of printing on an absorptive recording medium, such as a fabric.

Although the present invention has been described in detail with reference to specific aspects, it will be apparent to those skilled in the art that various modifications can be made without departing from the spirit and scope of the present invention.

The present application is based on JP 2023-055780 filed on March 30, 2023, which is incorporated by reference in its entirety.

## Claims

1. A method of inkjet recording, comprising:
applying an inkjet ink containing at least a polymerizable compound, a polymerization initiator, and water to an absorptive recording medium; and
irradiating the absorptive recording medium with an active energy ray simultaneously with the application of the inkjet ink,
wherein a surface temperature of a recording surface of the absorptive recording medium is 35°C or higher at a start of the applying the inject ink.

2. The method according to claim 1, wherein the surface temperature of the recording surface of the absorptive recording medium is 120°C or lower.

3. The method according to claim 2, wherein the surface temperature of the recording surface of the absorptive recording medium is 100°C or lower.

4. The method according to claim 1 or 2, wherein the absorptive recording medium is heated by a heating means at the start of the applying the inject ink .

5. The method according to claim 4, wherein the absorptive recording medium is heated from an opposite side to the recording surface of the absorptive recording medium.

6. The method according to claim 4, wherein the heating means is a hot plate.

7. The method according to claim 1 or 2, wherein the absorptive recording medium is a fabric.

8. The method according to claim 1 or 2, wherein the inkjet ink contains 70 mass% or more of a volatile component relative to a total amount of the inkjet ink.

9. The method according to claim 1 or 2, wherein a content of the water relative to a total amount of the inkjet ink is 40 mass% or more.

10. The method according to claim 1 or 2, wherein a light source of the active energy ray is a light-emitting diode with an emission peak wavelength in a range of 350 to 420 nm.

11. The method according to claim 1 or 2, wherein the inkjet ink contains a sensitizer and/or a surfactant.

12. The method according to claim 1 or 2, wherein a pretreatment agent is not applied to the absorptive recording medium before the applying the inject ink.

13. The method according to claim 1 or 2, wherein the polymerizable compound is present as particles in the inkjet ink.

14. The method according to claim 13, wherein the particles has an average particle size of 10 nm or more and 200 nm or less.

15. The method according to claim 1 or 2, wherein the polymerizable compound includes a (meth)acrylate compound.

16. The method according to claim 1 or 2, wherein the inkjet ink contains a pigment.

17. The method according to claim 1 or 2, wherein the active energy ray has an irradiation energy of 0.1 J/cm² or more.

18. The method according to claim 1 or 2, wherein the applying the inkjet ink comprises a shuttle mode.

19. The method according to claim 1 or 2, wherein the irradiating the absorptive recording medium comprises a shuttle mode.

20. The method according to claim 1 or 2, wherein the inkjet ink contains a water-soluble organic solvent.

21. The method according to claim 1 or 2, wherein a viscosity of the inkjet ink at 25°C is 1 mPa·sec or more and 25 mPa·sec or less.
